# EUROPÄISCHE PATENTSCHRIFT

(11) **EP 1 522 755 B1**
(45) Veröffentlichungstag und Bekanntmachung des Hinweises auf die Patenterteilung: **04.04.2007**
(21) Anmeldenummer: 04023274.6
(22) Anmeldetag: 30.09.2004
(51) Int. Cl.: F16D 65/12

(54) **Innenbelüftete Bremsscheibe**
Ventilated brake disc
Disque de frein ventilé

(30) Priorität: 08.10.2003 DE 10346702
(43) Veröffentlichungstag der Anmeldung: 13.04.2005
(73) Patentinhaber: DaimlerChrysler AG, 70567 Stuttgart (DE)
(72) Erfinder: Botsch, Siegfried, Dipl.-Ing., 71120 Grafenau (DE); Lesch, Martin, Dipl.-Ing., 71336 Waiblingen (DE); Oktay, Ilhan, 73061 Ebersbach (DE); Pfeifer, Hermann, Dipl.-Ing., 73457 Essingen (DE); Quinger, Christian, Dipl.-Ing., 73614 Schorndorf (DE)

(56) Entgegenhaltungen:
- EP-A- 1 233 201
- DE-A- 3 740 311
- DE-A- 3 835 637
- DE-A- 4 013 244
- DE-B- 1 283 611
- GB-A- 2 001 716
- US-A- 2 380 085
- US-A- 3 378 114
- PATENT ABSTRACTS OF JAPAN Bd. 2003, Nr. 11, 5. November 2003 (2003-11-05) -& JP 2003 206964 A (KOYO SEIKO), 25. Juli 2003 (2003-07-25)
- PATENT ABSTRACTS OF JAPAN Bd. 018, Nr. 325 (M-1625), 21. Juni 1994 (1994-06-21) -& JP 06 074269 A (AISIN TAKAOKA), 15. März 1994 (1994-03-15)

## Beschreibung

Die Erfindung betrifft eine innenbelüftete Bremsscheibe nach dem Oberbegriff des Anspruchs 1, wie sie z.B. aus der EP 1233201 bekannt ist. Die dort gezeigte Bremsscheibe ist zur Verringerung der Schirmung über mittig zwischen den Reibringenendende Stege am Bremsscheibentopf angebunden. Unter Schirmung wird hierbei ein axialer Verzug der Bremsscheibeverstanden, der insbesondere auf die unterschiedliche thermische Ausdehnung der einzelnen Bremsscheibenbereiche zurückzuführen ist.

Ferner wird in der DE 42 10 449 C2 eine innenbelüftete Bremsscheibe aus einem Graugussmaterial beschrieben, die einen Reibring und einen Bremsscheibentopf umfasst, wobei ausgehend von einem Bremsscheibentopf Verbindungsstege in einen Innenbelüftungsbereich des Reibrings verlaufen. Die Verbindungsstege verlaufen bzgl. des Reibrings radial und laufen in radialer Richtung konisch zu. Ferner sind die Verbindungsstege mittig zwischen zwei Scheiben des Reibringes angeordnet.

Durch diese Konstruktion der DE 42 10 449 C2 wird eine robuste Bremsscheibe geschaffen, die hohen Belastungen standhält und eine hohe Lebensdauer aufweist. Die hier beschriebene Bremsscheibe ist jedoch immer noch anfällig gegen Schirmung.

Die Folgeerscheinung der Bremsscheibenschirmung können zum einen Bremsscheibenrubbeln oder Quietschgeräusche sein, zum anderen können im Reibring Spannungen auftreten, die zur Rissbildung an der Bremsscheibenoberfläche führen können.

Weiterhin wird in der DE 42 10 448 A1 eine innenbelüftete Bremsscheibe vorgeschlagen, die sich von der DE 42 10 449 C2 darin unterscheidet, dass die Verbindungsstege vom Bremsscheibentopf ausschließlich mit einer Scheibe des Reibrings in Verbindung stehen. Auch für diese Konstruktion wird der Vorteil genannt, dass die Bremsscheibe robust ist, hohen Belastungen standhält und eine besonders gute Innenbelüftung aufweist. Jedoch auch diese Konstruktion ist besonders anfällig gegenüber Schirmung.

Weitere Vorschläge zur Konstruktion von innenbelüfteten Bremsscheiben werden beispielsweise in der DE 38 35 637 A1 gegeben. Die DE 199 25 003 A1 beschreibt den Aufbau eines Reibringes, der im Wesentlichen aus einem Faserverbundwerkstoff besteht und ebenfalls eine Innenbelüftung aufweist. Auch diese beiden Schriften liefern keinen weitreichenden Hinweis dafür, wie dem Problem der Schirmung effektiv entgegnet werden kann.

Der Erfindung liegt die Aufgabe zugrunde, eine innenbelüftete Bremsscheibe aus Gussmaterial bereitzustellen, die bei einer guten Durchlüftung der Bremsscheibe eine minimierte Schirmungsneigung aufweist.

Die Lösung der Aufgabe besteht in den Merkmalen des Patentanspruchs 1.

Die erfindungsgemäße innenbelüftete Bremsscheibe aus einem Gussmaterial umfasst einen Bremsscheibentopf und einen Reibring. Der Reibring wiederum umfasst zwei parallel zueinander angeordnete Scheiben, die über Gussstege miteinander verbunden sind. Die Oberflächen dieser Scheiben dienen als Reibflächen für Bremsbeläge. In einem Anschlussbereich zwischen dem Bremsscheibentopf und dem Reibring verlaufen, ausgehend vom Bremsscheibentopf, mehrere voneinander getrennte Verbindungsstege in einen Innenbelüftungsbereich des Reibrings. Diese Verbindungsstege stellen die Verbindung zwischen Topf und Reibring dar, sie sind so ausgestaltet, dass sie im Innenbelüftungsbereich - dem Bereich zwischen den beiden Scheiben des Reibrings - mit beiden Scheiben des Reibrings in fester Verbindung stehen, also angegossen sind.

Die Erfindung zeichnet sich dadurch aus, dass eine Mittelebene des Reibrings zu einer Mittelebene der Verbindungsstege versetzt angeordnet ist. Hierbei sind die Begriffe "Mittelebenen" als Schnittebenen zu verstehen, die senkrecht zu einer Bremsscheibenrotationsachse verlaufen. Die Versetzung der Mittelebenen des Reibrings und der Verbindungsstege zeichnet sich dadurch aus, dass sie zwischen 2 % und 25 % der Dicke des Reibrings beträgt.

Durch diese erfindungsgemäße Anordnung ist einerseits eine stabile, in sich verzugfreie Bremsscheibe gewährleistet, da die Verbindungsstege zwischen dem Bremsscheibentopf und dem Reibring mit beiden Reibscheiben des Reibrings in fester Verbindung stehen. Andererseits kann durch die gezielte Versetzung der Mittelebenen, also einer gezielten asymmetrischen Anbindung zwischen Topf und Reibring, der konstruktionsbedingte asymmetrische Verzug des Reibringes, der auf unterschiedliche Wärmeausdehnung zurückzuführen ist, entgegengetreten werden. Durch die beschriebenen erfindungsgemäßen Maßnahmen wird dieser Verzug der Bremsscheibe, also die Schirmung der Bremsscheibe, nachhaltig unterbunden.

Aufgrund des thermischen Verhaltens des Reibringes während eines Bremsvorganges verzieht sich der Reibring in der Regel in die Richtung des Bremsscheibentopfes. Aus diesem Grund ist erfindungsgemäß, die Mittelebene des Reibrings bzgl. der Mittelebene der Verbindungsstege in Richtung des Topfes bzw. in Richtung des Topfbodens versetzt.
In einer Ausgestaltung der Erfindung weisen die Verbindungsstege zumindest im Innenbelüftungsbereich eine Krümmung bzgl. einer radialen Richtung ausgehend vom Bremsscheibenmittelpunkt auf. Die Krümmung der Verbindungsstege verläuft hierbei zweckmäßigerweise in Drehrichtung der Bremsscheibe. Es hat sich gezeigt, dass eine derartige Krümmung der Verbindungsstege in Drehrichtung der Bremsscheibe ein zusätzliches Maß an Stabilität der Bremsscheibe bewirkt, was sich ebenfalls positiv auf die Schirmung des Reibringes auswirkt. Zudem wird durch die gekrümmten Verbindungsstege eine bessere Belüftung des Reibrings erzielt.

In einer weiteren Ausgestaltung der Erfindung verlaufen die Verbindungsstege zunächst radial bis in den Innenbelüftungsbereich des Reibrings, wo anschließend die Krümmung in Drehrichtung der Bremsscheibe erfolgt.

Dabei ist es zweckmäßig, dass die Verbindungsstege zumindest im Bereich der Krümmung parallele Flanken aufweisen. Unter parallel wird hierbei der äquidistante Verlauf von zwei Linien verstanden, also auch gekrümmten Linien oder geknickten Linien. Die parallele Ausrichtung der Flanken erleichtert den Modellbau für das Gießmodell einerseits und ist andererseits vorteilhaft beim Entfernen von Formsand nach dem Gießprozess.

In einer anderen Ausgestaltungsform der Erfindung teilen sich die Verbindungsstege y-förmig auf. Dabei verläuft ein Ast in Drehrichtung der Bremsscheibe und ein anderer Ast verläuft entgegen der Drehrichtung der Bremsscheibe. Auf diese Weise wird eine zusätzlich erhöhte Stabilität des Reibrings gewährleistet.

Eine weitere erfindungsgemäße Maßnahme zur Reduzierung der Schirmung besteht in der Verjüngung des Topfes in einem Wandungsbereich. Die Steifigkeit des Topfes wird somit im Innenbereich des Reibrings verringert, was eine Verformung des Reibrings in Richtung des Bremsscheibentopfes reduziert. Die Verjüngung erfolgt in zweckmäßiger Weise stufenförmig.

Eine weitere Maßnahme zur Reduzierung der Schirmung besteht darin, die beiden Scheiben des Reibrings unterschiedlich dick auszugestalten, wobei die Scheibe, die dem Topf zugewandt ist, dicker ausgestaltet ist.

Vorteilhafte Ausgestaltungsformen der Erfindung werden anhand der folgenden Figuren näher erläutert.

Dabei zeigen:
- Fig. 1: einen vertikalen Querschnitt durch eine Bremsscheibe,
- Fig. 2: einen horizontalen Querschnitt durch einen Bremsscheibenreibring.

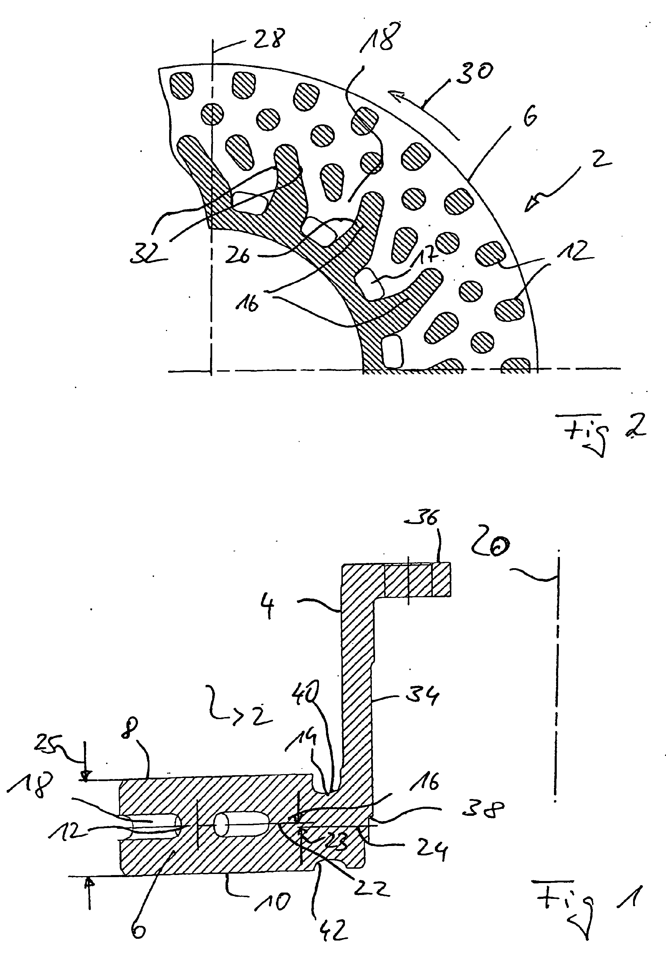

Die in Figur 1 dargestellte Bremsscheibe 2, die einen Bremsscheibentopf 4 und einen Reibring 6 aufweist, ist mit einer Innenbelüftung 18 im Bereich des Reibringes 6 ausgestattet. Der Bremsscheibentopf 4 weist einen Wandungsbereich 34 und einen Topfboden 36 auf. An der, den Topfboden 36 entfernten Seite des Wandungsbereiches 34 des Bremsscheibentopfes 4 ist der Reibring 6 über Verbindungsstege 16 an den Bremsscheibentopf 4 angebunden.

Der Reibring 6 weist zwei parallel verlaufende Scheiben 8 und 10 auf, deren äußere Oberflächen als Reibflächen dienen. Die Scheiben 8 und 10 sind über Gussstege 12 bzw. über die Verbindungsstege 16 miteinander verbunden. Die Verbindungsstege 16, die in Figur 1 in Form eines Schnittes durch den Reibring 6 näher zu erkennen sind, sind demnach sowohl mit der Scheibe 8 als auch mit der Scheibe 10 stoffschlüssig verbunden. Die Stege 16 füllen im Bereich des Reibrings 6 den Abstand zwischen den Scheiben 8 und 10 aus. Außerhalb des Reibrings 6, in einem Anbindungsbereich 14 zwischen dem Reibring 6 und dem Bremsscheibentopf 4, weiten sich die Verbindungsstege 16 auf. Sie erreichen jedoch nicht die Dicke des Reibringes 6. In Figur 1 ist, bzgl. einer Rotationsachse 20 der Bremsscheibe 2, eine senkrecht verlaufende Mittelebene 22 des Reibringes 6 eingezeichnet. Zudem ist eine weitere Mittelebene 24 durch die Stege 16 dargestellt. Hierbei ist die Mittelebene 22 des Reibringes 6 in Richtung des Topfbodens 36 bzgl. der Mittelebene 24 der Stege 16 versetzt. Die Versetzung beträgt etwa 5 % von der Dicke des Reibrings.

Durch die Versetzung 23 entsteht im Anbindungsbereich 14 an den Stegen zwei Ausbuchtungen 40 und 42. Hervorgerufen durch die Versetzung 23 ist die Ausbuchtung 40 tiefer als die Ausbuchtung 42. Die Ausbuchtung 40 ist dem Bremsscheibentopfboden 36 zugewandt.

Im Betrieb der Bremsscheibe heizt sich der Reibring 6, hervorgerufen durch die Reibenergie, thermisch auf und dehnt sich somit in radialer Richtung aus. Das Bestreben zur gleichmäßigen Ausdehnung in radialer Richtung wird durch den Bremsscheibentopf 4, mit dem der Reibring 6 im Anbindungsbereich 14 verbunden ist, unterdrückt. Dies hat zur Folge, dass sich der Reibring 6 in Richtung des Topfes verzieht. Dies wiederum hat Bremsgeräusche zur Folge. Durch die Versetzung 23 des Reibrings 6 in Richtung des Topfbodens 36 wird dieser Schirmungsbewegung entgegengewirkt.

Eine weitere Maßnahme, die der Schirmung entgegenwirkt, ist das Einbringen einer Verjüngung an einer inneren Topfseite im Wandungsbereich 34 des Bremsscheibentopfes 4. Im Ausführungsbeispiel nach Figur 1 ist die Verjüngung des Wandungsbereiches des Bremsscheibentopfes 4 stufenförmig ausgestaltet. Über, in diesem Fall, drei Stufen 38 wird im Anbindungsbereich 14 der Durchmesser des Wandungsbereiches 34 verringert. Durch diese gezielte Materialverringerung im Bereich der Topfwand 34 wird ebenfalls die Neigung zur Schirmung in Richtung des Bremsscheibentopfes 4 reduziert.

Der Verlauf des Steges 16 in Richtung des Bremsscheibenreibringes 4 ist exemplarisch in Figur 2 näher dargestellt. Die Stege 16, die ausgehend vom Bremsscheibentopf 4 vorerst im Anbindungsbereich 14 radial in Richtung Reibring 6 verlaufen, sind jeweils durch freie Bereiche 17 im Anbindungsbereich 14 getrennt. Die freien Bereiche 17 dienen dazu, einen Luftstrom, der durch den Innenbelüftungsbereich 18 geleitet wird, aus dem Reibring 6 auszuleiten und somit zur Kühlung beizutragen. Durch diesen Zuwachs an Kühlung des Reibringes 6 wird dessen thermische Ausdehnung verringert und somit die Schirmung ebenfalls reduziert. Im Bereich der Innenbelüftung 18 weisen die Verbindungsstege 16 eine Krümmung in Richtung der Drehrichtung 30 auf. Diese Krümmung 26, die in diesem Beispiel in Form eines Knickes dargestellt ist, dient dazu, den Luftstrom besser zu kanalisieren und durch die freien Bereiche 17 effektiv abzuführen. Auf diese Weise trägt die Krümmung 26 der Stege 16 zur Temperaturreduzierung des Reibringes 6 und somit zur Reduzierung der Schirmung und der mechanischen Belastung des Reibrings 4 bei.

In Figur 2 ist die Krümmung 26 des Steges 16 exemplarisch in Form eines Knickes dargestellt. Grundsätzlich wird jedoch unter dem Begriff "Krümmung" jegliche Abweichung des Steges 16 von der radialen Richtung 28 verstanden. Dies kann insbesondere auch durch eine Kurvenform, beispielsweise einer Evolventen, geschehen. Weiterhin kann es ebenfalls zweckmäßig sein, dass die Verbindungsstege 16 direkt ausgehend vom Bremsscheibentopf 4 in eine gekrümmte Richtung übergehen. Die Gussstege 12 im Bereich der Innenbelüftung 18 sind in vorteilhafter Weise so angeordnet, dass sie eine, wenn auch unterbrochene Verlängerung der Stege 16 darstellen. Diese Anordnung der Gussstege 12 trägt ebenfalls zur besseren Luftkanalisierung bei. Die Flanken 32 der Stege 16 verlaufen im Bereich nach der Krümmung 26 weitgehend parallel. Auch diese Anordnung ist aus strömungsmechanischen Gründen vorteilhaft und erfordert einen weniger hohen technischen Aufwand bei der Herstellung der Gießformen.

## Patentansprüche

1. Innenbelüftete Bremsscheibe (2) aus Gussmaterial, umfassend einen Bremsscheibentopf (4) und einen Reibring (6), wobei der Reibring (6) zwei parallel zueinander angeordnete Scheiben (8,10) aufweist, die über Gussstege (12) miteinander verbunden sind und in einem Anschlussbereich (14) zwischen Bremsscheibentopf (4) und Reibring (6) ausgehend vom Bremsscheibentopf (4) mehrere, voneinander getrennte Verbindungsstege (16) in einen Innenbelüftungsbereich (18) des Reibrings (6) verlaufen und hierbei mit beiden Scheiben (8,10) in Verbindung stehen,
**dadurch gekennzeichnet**
**dass** eine, bezüglich einer Rotationsachse (20) der Bremsscheibe (2) senkrecht verlaufende Mittelebene (22) des Reibrings (6) zu einer Mittelebene (24) der Verbindungsstege (16) axial versetzt angeordnet ist, wobei eine Versetzung (23) der Mittelebenen (22,24) des Reibrings (6) und der Verbindungsstege (16) zwischen 2 % und 25 % der Dicke des Reibrings (6) beträgt, und
**dass** die Mittelebene (22) des Reibrings (6) bezüglich der Mittelebene (24) der Verbindungsstege (16) in Richtung eines Topfbodens (36) versetzt ist und dass sich ein Wandungsbereich (34) des Bremsscheibentopfes (4) ausgehend vom Topfboden (36) im Bereich der Verbindungsstege (16) stufenförmig verjüngt.

2. Innenbelüftete Bremsscheibe nach Anspruch 1,
**dadurch gekennzeichnet,**
**dass** die Verbindungsstege (16) zumindest im Innenbelüftungsbereich (18) eine Krümmung (26) bezüglich einer radialen Richtung (28) zu einem Bremsscheibenmittelpunkt in Drehrichtung (30) der Bremsscheibe (2) aufweist.

3. Innenbelüftete Bremsscheibe nach Anspruch 2,
**dadurch gekennzeichnet,**
**dass** die Verbindungsstege (16) im Innenbelüftungsbereich (18) ausgehend von einer radialen Ausrichtung in eine in Drehrichtung (30) der Bremsscheibe (2) gekrümmten Ausrichtung übergehen.

4. Innenbelüftete Bremsscheibe nach Anspruch 2 oder 3,
**dadurch gekennzeichnet,**
**dass** Flanken (32) der Verbindungsstege (16) im Bereich der Krümmung (26) parallel verlaufen.

5. Innenbelüftete Bremsscheibe nach einem der Ansprüche 1 bis 4,
**dadurch gekennzeichnet,**
**dass** sich die Verbindungsstege y-förmig aufteilen, wobei ein Ast in Drehrichtung (30) verläuft und ein anderer Ast entgegen der Drehrichtung (30) verläuft.

6. Innenbelüftete Bremsscheibe nach einem der Ansprüche 1 bis 5,
**dadurch gekennzeichnet,**
**dass** die Scheiben des Reibrings unterschiedliche Dicken aufweisen.

## Claims

1. Internally ventilated brake disc (2) made from cast material, comprising a brake-disc chamber (4) and a friction ring (6), the friction ring (6) having two discs (8, 10) which are arranged parallel to one another and are connected to one another via cast webs (12), and a plurality of connecting webs (16) which are separate from one another extending, starting from the brake-disc chamber (4), into an internal ventilation region (18) of the friction ring (6) in a connecting region (14) between the brake-disc chamber (4) and the friction ring (6) and being connected here to both discs (8, 10), **characterized in that** a centre plane (22) of the friction ring (6) which extends perpendicularly with regard to a rotational axis (20) of the brake disc (2) is arranged offset axially with respect to a centre plane (24) of the connecting webs (16), an offset (23) of the centre planes (22, 24) of the friction ring (6) and the connecting webs (16) being between 2% and 25% of the thickness of the friction ring (6), and **in that** the centre plane (22) of the friction ring (6) is offset with regard to the centre plane (24) of the connecting webs (16) in the direction of a chamber base (36), and **in that** a wall region (34) of the brake-disc chamber (4), starting from the chamber base (36), tapers in a step-shaped manner in the region of the connecting webs (16).

2. Internally ventilated brake disc according to Claim 1, **characterized in that** the connecting webs (16) have a curvature (26), at least in the internal ventilating region (18), with regard to a radial direction (28) to a brake-disc centre point in the rotational direction (30) of the brake disc (2).

3. Internally ventilated brake disc according to Claim 2, **characterized in that** the connecting webs (16), starting in the internal ventilating region (18), change from a radial orientation into an orientation which is curved in the rotational direction (30) of the brake disc (2).

4. Internally ventilated brake disc according to Claim 2 or 3, **characterized in that** flanks (32) of the connecting webs (16) extend in parallel in the region of the curvature (26).

5. Internally ventilated brake disc according to one of Claims 1 to 4, **characterized in that** the connecting webs are divided in a y-shaped manner, one arm extending in the rotational direction (30) and another arm extending counter to the rotational direction (30).

6. Internally ventilated brake disc according to one of Claims 1 to 5, **characterized in that** the discs of the friction ring have different thicknesses.

## Revendications

1. Disque de frein à ventilation interne (2) en matériau moulé, comprenant un pot de disque de frein (4) et un anneau de friction (6), l'anneau de friction (6) présentant deux disques (8, 10) disposés parallèlement l'un à l'autre, lesquels sont reliés ensemble par des nervures en fonte (12) et dans une zone de raccordement (14) entre le pot de disque de frein (4) et l'anneau de friction (6) plusieurs nervures de liaison (16) séparées les unes des autres s'étendent à partir du pot de disque de frein (4) dans une zone de ventilation interne (18) de l'anneau de friction (6) et sont ainsi en liaison avec les deux disques (8, 10), **caractérisé en ce qu'**un plan central (22) de l'anneau de friction (6) qui s'étend perpendiculairement à un axe de rotation (20) du disque de frein (2) est disposé avec un décalage axial par rapport à un plan central (24) des nervures de liaison (16), un décalage (23) des plans centraux (22, 24) de l'anneau de friction (6) et des nervures de liaison (16) étant compris entre 2 et 25 % de l'épaisseur de l'anneau de friction (6), et **en ce que** le plan central (22) de l'anneau de friction (6) est décalé par rapport au plan central (24) des nervures de liaison (16) en direction d'un fond du pot (36) et **en ce qu'**une zone de paroi (34) du pot de disque de frein (4) se rétrécit par paliers dans la zone des nervures de liaison (16) en partant du fond du pot (36).

2. Disque de frein à ventilation interne selon la revendication 1, **caractérisé en ce que** les nervures de liaison (16) présentent au moins dans la zone de ventilation interne (18) une courbure (26) par rapport à une direction radiale (28) en direction d'un point central de disque de frein dans le sens de la rotation (30) du disque de frein (2).

3. Disque de frein à ventilation interne selon la revendication 2, **caractérisé en ce que** les nervures de liaison (16) passent d'une orientation radiale dans la zone de ventilation interne (18) à une orientation courbée dans le sens de rotation (30) du disque de frein (2).

4. Disque de frein à ventilation interne selon la revendication 2 ou 3, **caractérisé en ce que** les flancs (32) des nervures de liaison (16) s'étendent parallèlement dans la zone de la courbure (26).

5. Disque de frein à ventilation interne selon l'une des revendications 1 à 4, **caractérisé en ce que** les nervures de liaison se séparent en forme de Y, une branche s'étendant dans le sens de rotation (30) et une autre branche s'étendant dans le sens contraire de la rotation (30).

6. Disque de frein à ventilation interne selon l'une des revendications 1 à 5, **caractérisé en ce que** les disques de l'anneau de friction présentent des épaisseurs différentes.
